# EUROPEAN PATENT APPLICATION

(11) **EP 2 879 079 A1**
(43) Date of publication of application: **03.06.2015**
(21) Application number: 14194048.6
(22) Date of filing: 20.11.2014
(51) Int. Cl.: G06K 9/00

(54) **Biological information determination apparatus**

(30) Priority: 28.11.2013 JP 2013246810
(71) Applicant: FUJITSU LIMITED, Kawasaki-shi, Kanagawa 211-8588 (JP)
(72) Inventor: Abe, Narishige, Kanagawa, 211-8588 (JP)
(74) Representative: Hoffmann Eitle

(57) **Abstract**

A storage unit (111) stores an image representing biological information of a hand. A hand determination unit (112) determines a type of the hand on the basis of a result of comparison between a first feature amount which is based on the size of a first region corresponding to a first finger, among a plurality of regions corresponding to a plurality of fingers in the image, and a second feature amount which is based on the size of a second region corresponding to a second finger, among the plurality of regions in the image.

## Description

### FIELD

The embodiments discussed herein are related to a biological information determination apparatus.

### BACKGROUND

In recent years, biological authentication has been utilized in various fields ranging from large-scale authentication infrastructure such as the management of people going in and out of a building or a room, border control at borders between nations, national unique IDs for uniquely identifying people, etc., to personal terminals such as mobile telephones, personal computers, etc.

In a biological authentication system of large-scale authentication infrastructure, a wide-area fingerprint sensor, which can collect many pieces of fingerprint information at one time, is often used. This type of biological authentication system in some cases specifies the type of hand of a user (the distinction between right and left hands) as the hand that is to be read by the fingerprint sensor for registration or verification. However, while it is possible for a fingerprint sensor to read a fingerprint image, it is difficult for the fingerprint sensor to determine the type of the hand put on the fingerprint sensor.

In the view of the above situation, some techniques have been proposed for determining the type of a hand put on a fingerprint sensor.

For example, a two-dimensional four-finger image determination apparatus is known that determines the type of hand and the type of finger on the basis of a two-dimensional four-finger image of the hand (See Patent Document 1 for example). This two-dimensional four-finger image determination apparatus extracts ridge directions around the center of the fingerprint from the fingerprint image of each finger that was cut out of a two-dimensional four-finger image, determines the tendency of the ridge directions for the fingerprint of each finger, and determines the type of hand and the type of finger on the basis of combinations of tendencies of the ridge directions of the four fingers.

An input apparatus is also known that determines whether an onboard information terminal is being used by a left hand or a right hand in accordance with the result of fingerprint authentication (See Patent Document 2 for example). This input apparatus forcibly prohibits the use of the onboard information terminal when it has recognized the use as being by a left hand (or a right hand) in a vehicle having the steering wheel on the right (left) side.

A biological authentication apparatus is also known that determines which of the hands a person to be authenticated will extend, and makes the display unit display an image based on the result of the determination (See Patent Document 3 for example). This biological authentication apparatus determines which of the hands a person to be authenticated will extend to the area that can obtain biological information in the biological information sensor, on the basis of the positional relationship between the person to be authenticated and the casing of the biological authentication apparatus.
Patent Document 1: Japanese Laid-open Patent Publication No. 2006-99326
Patent Document 2: Japanese Laid-open Patent Publication No. 2005-82086
Patent Document 3: Japanese Laid-open Patent Publication No. 2010-146158

### SUMMARY

It is an object in one aspect of the invention to more easily determine the type of hand on the basis of biological information of a hand.

According to an aspect of the embodiments, a biological information determination apparatus includes a storage unit and a hand determination unit.

The storage unit stores an image representing biological information of a hand. The hand determination unit determines a type of the hand on the basis of a result of comparison between a first feature amount which is based on a size of a first region corresponding to a first finger, among a plurality of regions corresponding to a plurality of fingers in the image stored in the storage unit, and a second feature amount which is based on a size of a second region corresponding to a second finger, among the plurality of regions in the image.

### BRIEF DESCRIPTION OF DRAWINGS

FIG. 1 illustrates a functional configuration of a biological information determination apparatus.
FIG. 2 is a flowchart of a biological information determination process.
FIG. 3 illustrates a first specific example of the biological information determination apparatus.
FIG. 4 is a flowchart of a biological information registration process.
FIG. 5 is a flowchart of a region extraction process.
FIG. 6 is a flowchart of a first reading determination process.
FIG. 7 is a flowchart of a second reading determination process.
FIG. 8 illustrates a first obtained image and a last obtained image.
FIG. 9 illustrates a second specific example of the biological information determination apparatus.
FIG. 10 is a flowchart of a first biological information verification process.
FIG. 11 is a flowchart of a second biological information verification process.
FIG. 12 illustrates a hardware configuration of an information processing apparatus.

### DESCRIPTION OF EMBODIMENTS

Hereinafter, detailed explanations will be given for the embodiments by referring to the drawings.

The two-dimensional four-finger image determination apparatus of Patent Document 1 is based on an assumption that a fingerprint image including the four fingers is input, and accordingly users who do not have at least one of the four fingers are excluded as targets of the determination. Also, when a sensor that inputs a fingerprint image including only a index finger, a middle finger and a ring finger is used, a determination cannot be conducted.

Also, the two-dimensional four-finger image determination apparatus of Patent Document 1 and the input apparatus of Patent Document 2 are based on an assumption that a fingerprint image read by the fingerprint sensor is sufficiently clear because the type of the hand is determined on the basis of fingerprint patterns. When the condition of the surface of a finger is not good and the read fingerprint image is not clear, the pattern of the fingerprint is not extracted accurately, which makes it difficult to determine the type of the hand.

Further, the biological authentication apparatus of Patent Document 3 includes a sensor for obtaining positional relationships between a person to be authenticated and the casing of the biological authentication apparatus in addition to the biological information sensor, which inevitably increases the size and the cost regarding the apparatus.

Note that the above problem arises not only in the biological authentication based on fingerprints but also in biological authentication based on other types of information such as palm prints, veins of palms, etc., or in the registration of biological information in a biological authentication system.

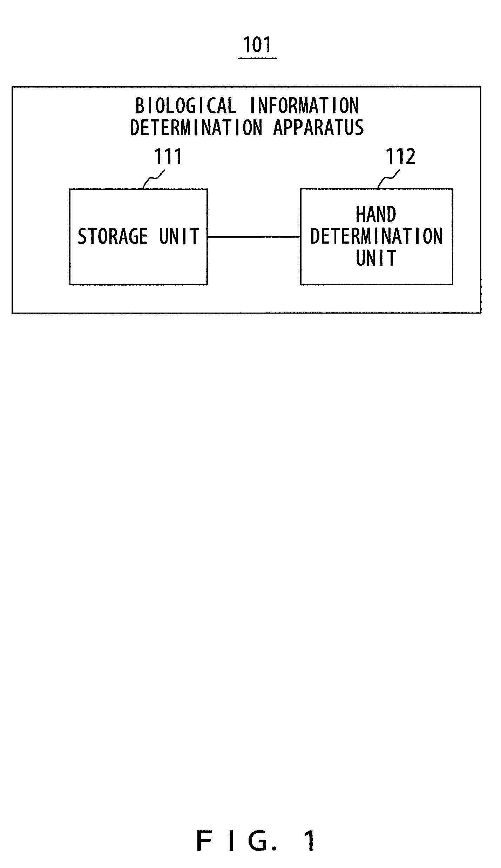

FIG. 1 illustrates an example of a functional configuration of a biological information determination apparatus. A biological information determination apparatus 101 illustrated in FIG. 1 includes a storage unit 111 and a hand determination unit 112. The storage unit 111 stores an image representing biological information of a hand. The hand determination unit 112 determines a type of the hand by using the image stored in the storage unit.

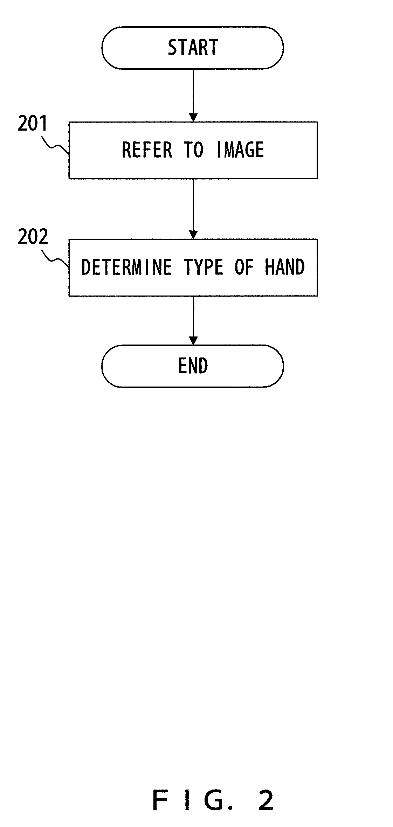

FIG. 2 is a flowchart explaining an example of a biological information determination process performed by the biological information determination apparatus 101 illustrated in FIG. 1.

The hand determination unit 112 refers to an image stored in the storage unit 111 (step 201), and determines a type of the hand by using the first region corresponding to the first finger and the second region corresponding to the second finger from among a plurality of regions corresponding to a plurality of fingers in an image (step 202). In this process, the determination unit 112 determines the type of the hand on the basis of a result of comparison between the first feature amount based on the size of the first region and the second feature amount based on the size of the second region.

According to this biological information determination apparatus 101, it is possible to more easily determine the type of hand on the basis of biological information of a hand.

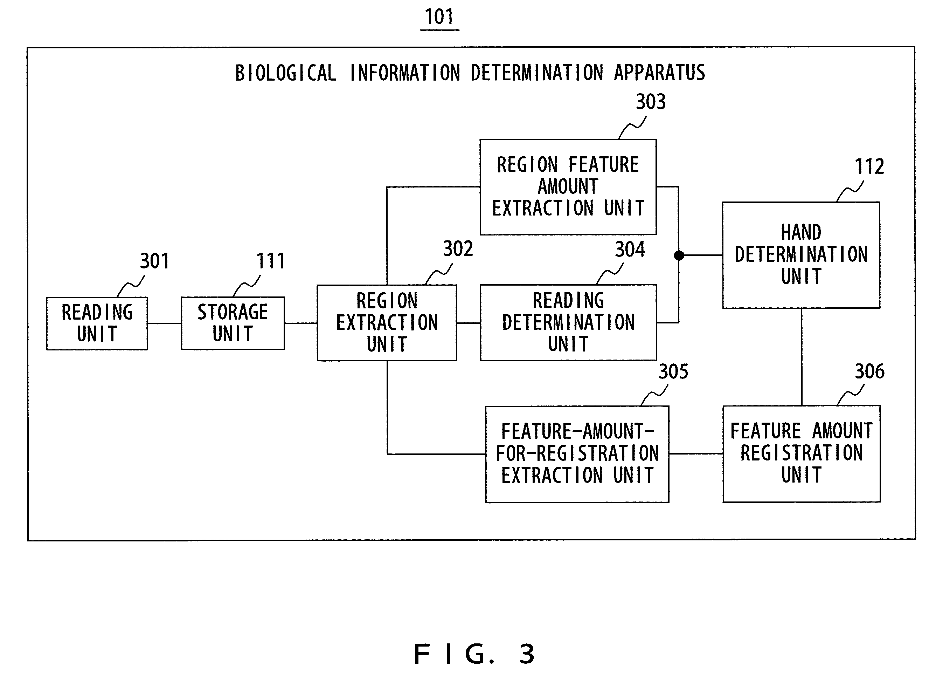

FIG. 3 illustrates the first specific example of the biological information determination apparatus 101 illustrated in FIG. 1. The biological information determination apparatus 101 illustrated in FIG. 3 is used for registering biological information, and includes the storage unit 111, the hand determination unit 112, a reading unit 301 (a reader), a region extraction unit 302, a region feature amount extraction unit 303, a reading determination unit 304, a feature-amount- for-registration extraction unit 305, and a feature amount registration unit 306.

The reading unit 301 reads images representing biological information from a hand of a user by time series (for each frame), and the storage unit 111 stores the read images. When for example the reading unit 301 is a fingerprint sensor, the reading unit 301 reads a fingerprint image from a hand of a user. As a method of detecting a fingerprint image, for example a contact detection may be used such as capacitance detection, thermal detection, electric field detection, optical detection, ultrasonic detection, etc.

The region extraction unit 302 extracts the region corresponding to each finger from an image stored in the storage unit 111, and the region feature amount extraction unit 303 extracts the feature amount based on the size of the extracted region. When the reading unit 301 based on contact detection is used, the region corresponding to each finger is the region that is in contact with the finger.

The reading determination unit 304 determines whether or not the reading unit 301 has completed the reading of images. When for example an image that allows the determination of a type of hand has been obtained, the reading determination unit 304 may determine that the reading of images has been completed.

When the reading of images has been completed, the hand determination unit 112 determines the type of hand on the basis of the feature amounts of a plurality of regions extracted by the region feature amount extraction unit 303. The feature-amount-for-registration extraction unit 305 extracts the feature amount for registration from the biological information of the hand, and the feature amount registration unit 306 associates the feature amount for registration, the type of hand, and the identification information of the user so as to register them in a biological information database.

As a feature amount for registration, for example the feature amount of a fingerprint image may be used and a feature amount of other biological information may also be used. When for example the reading unit 301 includes a palm print sensor, the feature amount of a palm image may be used as a feature amount for registration and when for example the reading unit 301 includes a vein sensor, the feature amount of a vein image of a palm may be used as a feature amount for registration.

The biological information database may be provided in the biological information determination apparatus 101 and may also be provided in a different apparatus. When the biological information database is provided in a different apparatus, the feature amount registration unit 306 associates the feature amount for registration, the type of hand, and the identification information of a user, and transmits them to the different apparatus.

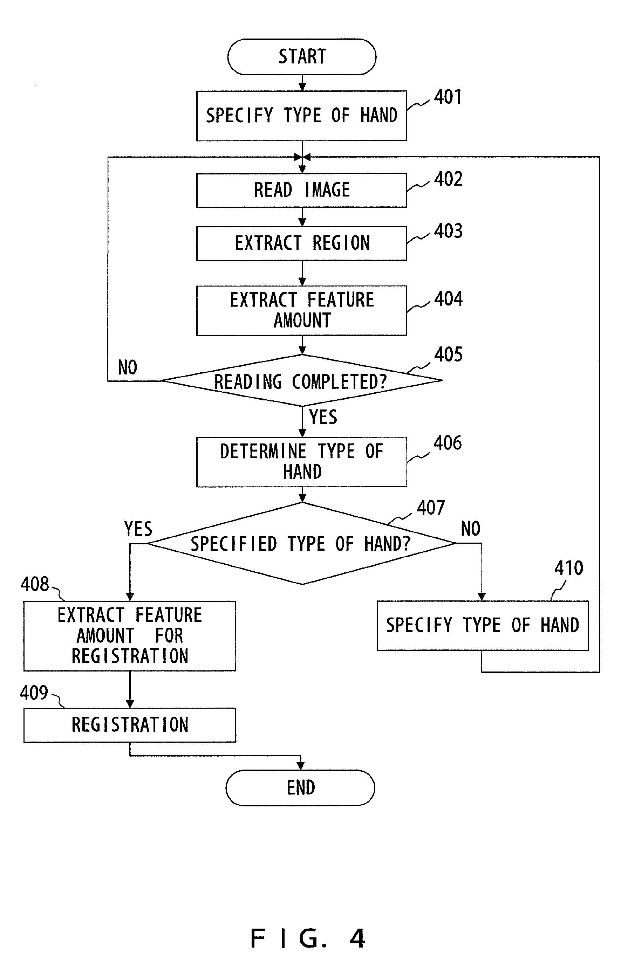

FIG. 4 is a flowchart explaining an example of a biological information registration process performed by the biological information determination apparatus 101 illustrated in FIG. 3.

First, the hand determination unit 112 specifies for the user the type of hand as a registration target (step 401), and the user extends the hand of the specified type to the reading unit 301.

Next, the reading unit 301 reads an image from the hand of the user (step 402), and the region extraction unit 302 extracts the region corresponding to each finger from the read image (step 403).

Next, the region feature amount extraction unit 303 extracts the feature amount based on the size of the extracted region (step 404), and the reading determination unit 304 determines whether or not the reading unit 301 has completed the reading of the image (step 405). When the reading of the image has not been completed (No in step 405), the biological information determination apparatus 101 repeats the processes in and after step 402.

When the reading of the image has been completed (Yes in step 405), the hand determination unit 112 determines the type of the hand that the user has extended, on the basis of feature amounts of a plurality of regions extracted by the region feature amount extraction unit 303 (step 406). Then, the hand determination unit 112 checks whether or not the type of the hand that the user has extended is identical with the type of hand specified for the user (step 407).

When the type of the hand that the user has extended is not identical with the type of hand specified for the user (No in step 407), the hand determination unit 112 again instructs the user to extend the hand in accordance with the specified type (step 410). Then, the biological information determination apparatus 101 repeats the processes in and after step 402.

When the type of the hand that the user has extended is identical with the type of hand specified for the user (Yes in step 407), the feature-amount-for-registration extraction unit 305 extracts a feature amount for registration from the biological information of the hand (step 408). Then, the feature amount registration unit 306 associates the feature amount for registration, the type of hand, and the identification information of the user so as to register them in a biological information database (step 409).

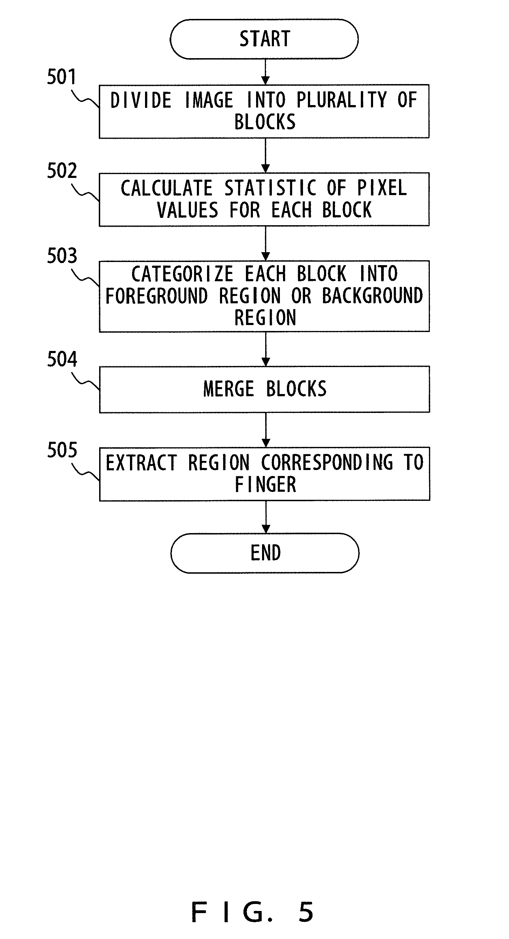

FIG. 5 is a flowchart explaining an example of a region extraction process in step 403 illustrated in FIG. 4.

First, the region extraction unit 302 divides a read image into a plurality of blocks (step 501). In this dividing, the region extraction unit 302 may use a rectangular block of for example v vertical pixels by w horizontal pixels (v and w are integers equal to or greater than one) as units of the dividing and may determine the values of v and w on the basis of the resolution of the reading unit 301. When for example a 500-dpi fingerprint sensor is used as the reading unit 301, it is desirable to use a block of 8×8 or 16×16 because the average interval between ridges is approximately eight pixels.

Next, the region extraction unit 302 calculates the statistic of pixel values for each block (step 502). As a statistic for each block, for example the average value, the dispersion, the maximum value, the minimum value, the median value, the mode value, etc. of a plurality of pixel values in one block may be used.

Next, the region extraction unit 302 categorizes each block into a foreground region or a background region (step 503). In a case when for example a brightness value is used as a pixel value, the region extraction unit 302 may categorize a block into a foreground region when the statistic is smaller than a threshold and may categorize a block into a background region when the statistic is equal to or greater than the threshold. In such a case, the threshold may be determined on the basis of the difference between the pixel value of the ridges and the pixel value of portions other than the ridges of a fingerprint. When for example the pixel value of the ridges is close to zero and the pixel value of portions other than the ridges is close to 255, a value around 128 may be used as the threshold.

Next, the region extraction unit 302 merges blocks categorized into foreground regions (step 504). In this process, the region extraction unit 302 may scan blocks in the rightward direction starting from the upper left block in the image in units of lines by using a labeling process so as to merge adjacent foreground blocks into one merged region. Thereby, a plurality of merged regions respectively corresponding to a plurality of fingers are generated.

Then, the region extraction unit 302 extracts the respective merged regions as regions that correspond to the respective fingers (step 505).

According to a region extraction process as described above, it is possible to extract only the foreground region including the fingerprint image by removing noise in the background region in an image, leading to increased accuracy in determining the type of the hand.

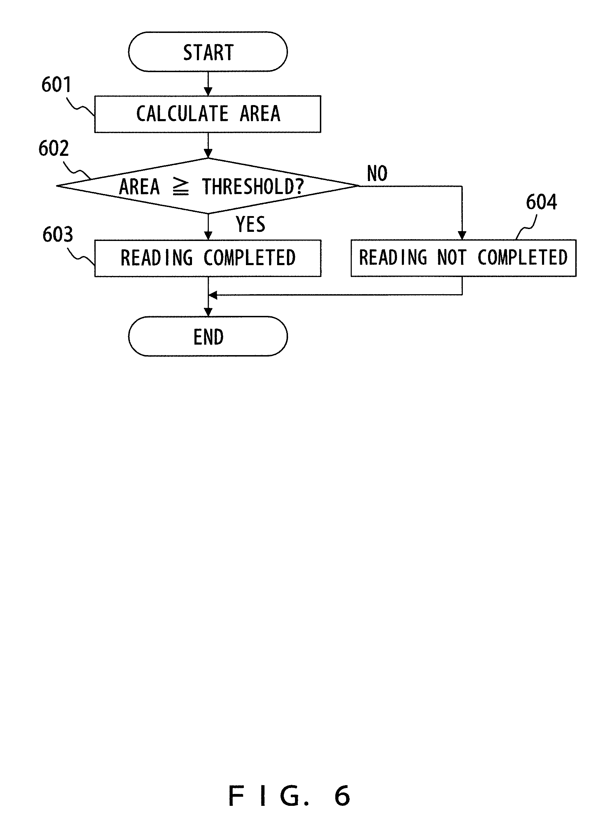

FIG. 6 is a flowchart explaining an example of the reading determination process in step 405 illustrated in FIG. 4.

First, the reading determination unit 304 calculates the area of the region corresponding to each finger (step 601) and compares the calculated area with a threshold (step 602). When the areas of all regions are equal to or greater than the threshold (Yes in step 602), the reading determination unit 304 determines that the reading of image has been completed (step 603). When the area of any of the regions is smaller than the threshold (No in step 602), the reading determination unit 304 determines that the reading of image has not been completed (step 604).

The threshold of the area may be determined on the basis of the resolution of the reading unit 301. When for example a 500-dpi fingerprint sensor is used as the reading unit 301, it is also possible to use 128x128 (=16384) pixels, which is the size that allows the determination of a fingerprint pattern, as the threshold.

It is also possible to perform a reading determination process on the basis of the position of the region corresponding to each finger instead of the area of such a region. In such a case, the reading determination unit 304 calculates the position of the center of gravity of each region and determines that the reading of image has been completed when the positions of the center of gravity of all regions are in the effective sensing area of the reading unit 301. When the position of the center of gravity of any of the regions is out of the effective sensing area, the reading determination unit 304 determines that the reading of image has not been completed. It is also possible to use a different position that represents each region instead of the position of the center of gravity.

It is also possible to perform the reading determination process on the basis of the contrast in the region corresponding to each finger instead of the area of such a region. In such a case, the reading determination unit 304 calculates the contrast in each region and determines that the reading of image has been completed when the contrasts of all regions are equal to or greater than a threshold. When the contrast in any of the regions is smaller than the threshold, the reading determination unit 304 determines that the reading of image has not been completed.

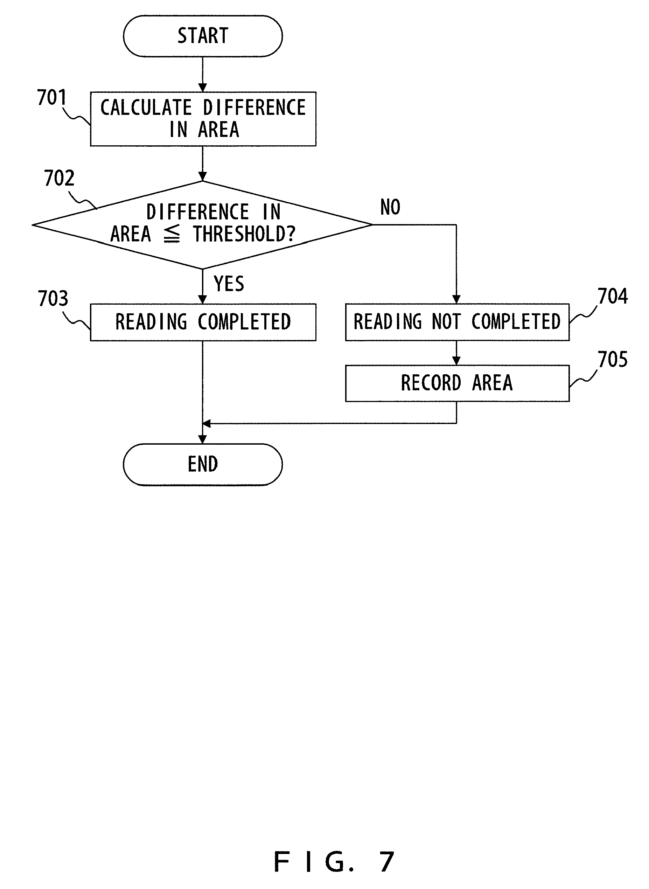

FIG. 7 is a flowchart explaining a different example of the reading determination process in step 405 illustrated in FIG. 4.

First, the reading determination unit 304 calculates the area of the region corresponding to each finger, and obtains the difference between the calculated area and the area of the same region at the previous time of day (previous frame) (step 701). Then, the reading determination unit 304 compares the area difference with a threshold (step 702). When all area differences are equal to or smaller than the threshold (Yes in step 702), the reading determination unit 304 determines that the reading of image has been completed (step 703).

When any of the area differences is equal to or greater than the threshold (No in step 702), the reading determination unit 304 determines that the reading of image has not been completed (step 704). Then, the reading determination unit 304 records the calculated area of each region as the area of each region at the current time of day (current frame).

The threshold of area difference may be determined on the basis of the resolution of the reading unit 301. When for example a 500-dpi fingerprint sensor is used as the reading unit 301, it is also possible to use 8x8 (=64) pixels as the threshold.

It is also possible to perform the reading determination process on the basis of changes in the position of the region corresponding to each finger between frames instead of changes in the area of the region corresponding to each finger. In such a case, the reading determination unit 304 calculates the distance between the position of the center of gravity of each region and the position of the center of gravity of the same region at the previous time of day (previous frame) and determines that the reading of image has been completed when the distances for all regions are equal to or smaller than a threshold.

When the difference for any of the regions is greater than the threshold, the reading determination unit 304 determines that the reading of image has not been completed, and records the calculated position of the center of gravity of each region as the position of the center of gravity of each region at the current time of day (the current frame). It is also possible to use a different position that represents each region instead of the position of the center of gravity.

The threshold of distance between the positions of the centers of gravity may be determined on the basis of the resolution of the reading unit 301. When for example a 500-dpi fingerprint sensor is used as the reading unit 301, it is also possible to use 8 pixels as the threshold.

According to the above described various reading determination processes, it is possible to prevent interruption and continuation that is not intended by a user and also to reduce noise caused by the reading operations, leading to an increased accuracy in determining the type of hand.

Incidentally, the inventor has noticed that two insights can be used for making the distinction between right and left hands. The first insight is that index fingers are statistically thicker than ring fingers and the second insight is that index fingers are more likely to be given power than ring fingers because of the structure of the human hand.

The difference in length between a index finger and a ring finger may be used as a difference between them. However, the difference in length between index fingers and ring fingers is statistically small. Also, when an image does not include the positions of the bases of fingers or when the angle of the hand has changed, it is difficult to measure the lengths of fingers accurately. Therefore, it is more desirable to use width differences between fingers than to use length differences between the fingers.

It often occurs that a planar contact fingerprint sensor can obtain excellent fingerprint images when a finger is pressed onto the fingerprint sensor somewhat forcefully. It is desirable that fingers be forcefully pressed down, particularly when the finger is a "dry finger", which is a finger having a dry surface.

However, it varies between fingers how much power each finger can be given, and index fingers are more likely to be given power than ring fingers. Accordingly, in the image at the start of the reading of image (a first obtained image), all fingers have almost the same contact area, whereas in the image at the completion of the reading of the image (the last obtained image), the contact area of the index finger, which is likely to be given power, has become larger. Therefore, according to the second insight, it is presumed that a index finger results in a greater difference in contact area between the first obtained image and the last obtained image than a ring finger.

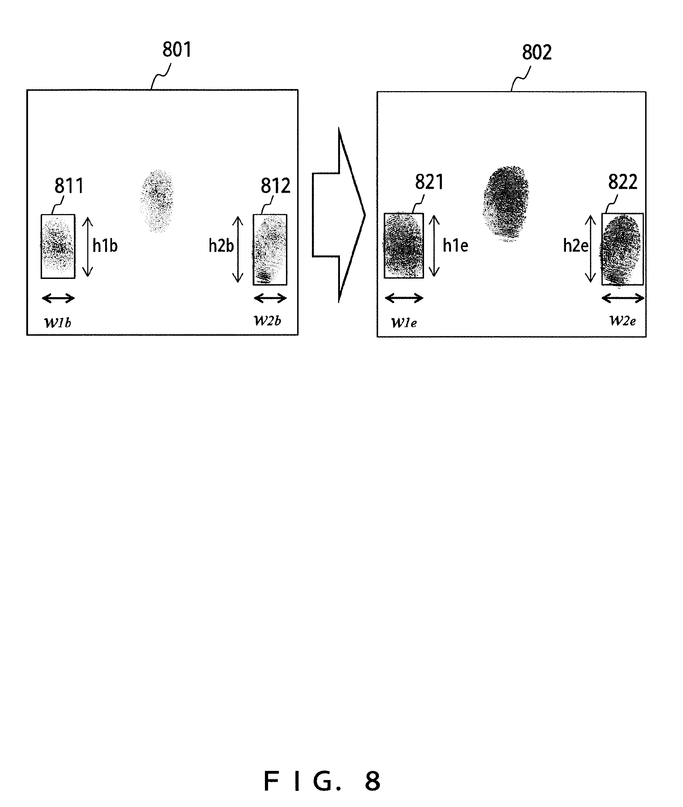

FIG. 8 illustrates an example of the first obtained image and last obtained image as described above. In the present example, the user puts the index finger, the middle finger and the ring finger of the right or left hand onto the reading unit 301, and the reading unit 301 has read the fingerprint images of these three fingers in time series.

In an first obtained image 801, a region 811 is the region corresponding to the finger closest to the left edge of the image (leftmost finger) and a region 812 is the region corresponding to the finger closest to the right edge of the image (the rightmost finger). Similarly, in a last obtained image 802, a region 821 is the region corresponding to the leftmost finger and a region 822 is the region corresponding to the rightmost finger. When the hand extended by the user is the right hand, the leftmost finger is the index finger and the rightmost finger is the ring finger. When the hand extended by the user is the left hand, the leftmost finger is the ring finger and the rightmost finger is the index finger.

In step 404 illustrated in FIG. 4, from among a plurality of regions corresponding to a plurality of fingers, the region feature amount extraction unit 303 extracts the feature amounts based on the sizes of the regions from the regions corresponding to for example the leftmost finger and the rightmost finger. As a feature amount based on the size of a region, a width of a region, a difference in area of regions, etc. may be used.

When the width of a region is used as the feature amount, the region feature amount extraction unit 303 extracts a width w1e of the region 821 and a width w2e of the region 822 from the last obtained image 802. The region feature amount extraction unit 303 may extract widths w1b and w2b instead of the widths w1e and w2e.

When the difference in area of regions is used as a feature amount, the region feature amount extraction unit 303 calculates an area a1b of the region 811 and an area a2b of the region 812 in the first obtained image 801, and also calculates an area a1e of the region 821 and an area a2e of the region 822 in the last obtained image 802. The area a1b may be obtained by multiplying a height h1b by the width w1b of the region 811, and the area a2b may be obtained by multiplying a height h2b by the width w2b of the region 812. Similarly, the area a1e may be obtained by multiplying a height h1e by the width w1e of the region 821, and the area a2e may be obtained by multiplying a height h2e by the width w2e of the region 822.

Then, the region feature amount extraction unit 303 calculates the difference between the areas a1b and a1e, and also calculates the difference between the areas a2b and a2e.

When the width and the difference in area are used as feature amounts, the region feature amount extraction unit 303 extracts the widths w1e and w2e from the last obtained image 802, calculates the difference between the areas a1b and a1e, and calculates the difference between the areas a2b and a2e. The region feature amount extraction unit 303 may extract the widths w1b and w2b instead of the widths w1e and w2e.

In step 406 illustrated in FIG. 4, the hand determination unit 112 performs a comparison between for example the feature amount of the region corresponding to the leftmost finger and the feature amount of the region corresponding to the rightmost finger, and thereby can determine the type of hand on the basis of one of the following types of determination logic.

### (1) Determination logic 1

When the feature amount is the width of a region, the hand determination unit 112 determines the type of hand by using the following conditional expression.

```
 If w1e>w2e right hand
   Else left hand
```

The widths w1b and w2b may be used instead of the widths w1e and w2e in the above conditional expression.

### (2) Determination logic 2

When the feature amount is the difference in area of regions, the hand determination unit 112 determines the type of hand by using the following conditional expression.

```
 If (a1b-a1e)2>(a2b-a2e)2 right hand
    Else left hand
```

### (3) Determination logic 3

When the feature amount is the difference in area of regions, the hand determination unit 112 determines the type of hand by using the following conditional expression.

```
 If |a1b-a1e|>|a2b-a2e| right hand
    Else left hand
```

### (4) Determination logic 4

When the feature amount is the width and the difference in area, the hand determination unit 112 determines the type of hand by using the following conditional expression.

```
 If α·w1e+β·(a1b-a1e)2
    >α·w2e+β·(a2b-a2e)2 right hand
    Else left hand
```

α and β represent weight coefficients regarding width and difference in area, respectively, and are positive real numbers. When the weight of width is set to be greater than that of the difference in area, α and β may be set as for example α:β=2:1

The widths w1b and w2b may be used instead of the widths w1e and w2e in the above conditional expression.

### (5) Determination logic 5

When the feature amount is the difference in area, the hand determination unit 112 determines the type of hand by using the following conditional expression.

```
 If α·w1e+β·|a1b-a1e|
    >α·w2e+β·|a2b-a2e| right hand
   Else left hand
```

The widths w1b and w2b may be used instead of the widths w1e and w2e in the above conditional expression.

A feature amount based on the size of a region such as a width of a region or a difference in area of regions can be extracted and compared more easily than patterns of fingerprints. Accordingly, by using a feature amount based on the size of a region, it is possible to determine the type of hand more rapidly. Also, the accuracy in determining the type of hand increases by using both the width and the difference in area.

Also, the first obtained image and the last obtained image illustrated in FIG. 8 are just exemplary, and other fingers may be used for determining the type of hand. For example, the three fingers of a thumb, a index finger and a middle finger, the three fingers of a middle finger, a ring finger and a little finger and four or five fingers may be used instead of the three fingers of a index finger, a middle finger and a ring finger.

Also, regions used for determining the type of hand are not limited to the regions corresponding to the leftmost finger and the rightmost finger. It is also possible for example to select two or more regions from among a plurality of regions corresponding to a plurality of fingers included in one image and to use the selected regions for determining the type of hand. In such a case, it is possible to select two or more regions corresponding to two or more fingers that have different thicknesses or that are likely to be given different levels of power.

It is also possible to select images at two times of day from among images at a plurality of times of day from the first obtained image to the last obtained image so as to use the selected images for determining the type of hand.

Determination logic 1 through determination logic 5 described above are just exemplary, and the type of hand may be determined on the basis of other determination logic. A feature amount based on the size of a region is not limited to width or difference in area.

In step 408 illustrated in FIG. 4, the feature-amount-for-registration extraction unit 305 extracts the feature amount for registration from the image read by the reading unit 301. When for example the feature amount of a fingerprint image is used as a feature amount for registration, the feature-amount-for-registration extraction unit 305 extracts the feature amount of the fingerprint image from the region, extracted by the region extraction unit 302, corresponding to each finger. As a feature amount of a fingerprint image, a position of a minutia (point at which a ridge branches or a ridge ends) of a fingerprint or the like may be used.

When the feature amount of a palm print image is used as a feature amount for registration, the feature-amount-for-registration extraction unit 305 extracts the feature amount from the palm print image read by the reading unit 301. When the feature amount of a palm vein image is used as a feature amount for registration, the feature-amount-for-registration extraction unit 305 extracts the feature amount from the vein image read by the reading unit 301.

According to the biological information registration process illustrated in FIG. 4, even when only fingerprint images of three fingers have been input, the type of hand can easily be determined without depending upon the fingerprint patterns. Also, a sensor for obtaining the positional relationship between a user and the casing of the biological information determination apparatus 101 is not necessary.

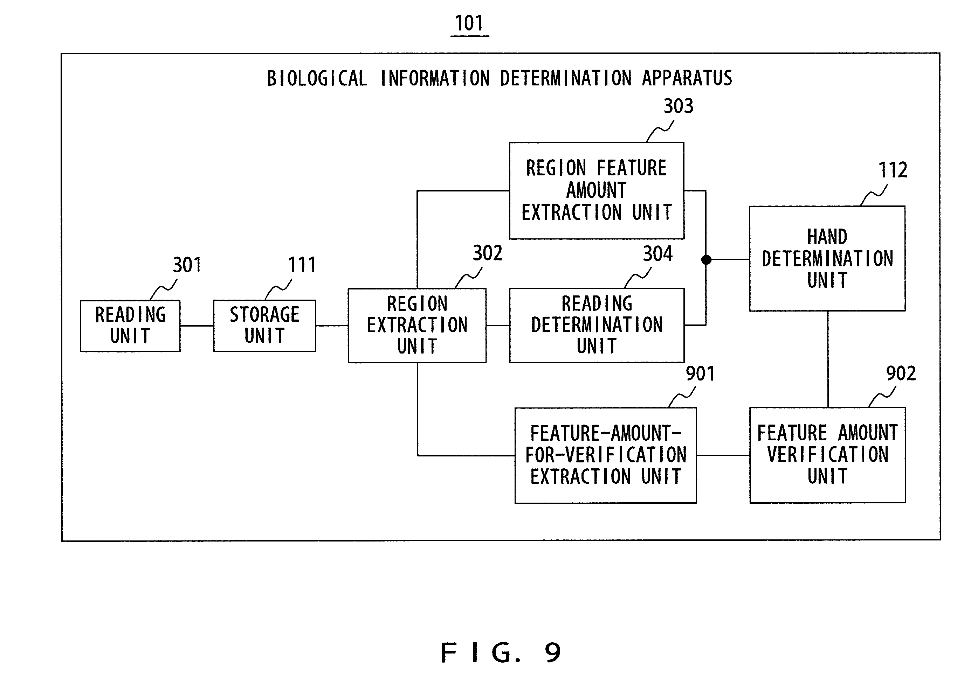

FIG. 9 illustrates a second specific example of the biological information determination apparatus 101 illustrated in FIG. 1. The biological information determination apparatus 101 illustrated in FIG. 9 is used for biological authentication, and includes the storage unit 111, the hand determination unit 112, the reading unit 301, the region extraction unit 302, the region feature amount extraction unit 303, the reading determination unit 304, a feature-amount-for-verification extraction unit 901, and a feature amount verification unit 902. The hand determination unit 112, the reading unit 301, the region extraction unit 302, the region feature amount extraction unit 303, and the reading determination unit 304 operate in a similar manner to those described in the first specific example illustrated in FIG. 3.

The feature-amount-for-verification extraction unit 901 extracts the feature amount for verification from the biological information of a hand, and the feature-amount verification unit 902 compares the feature amount for verification with a feature amount registered in the biological information database so as to output a verification result. A verification result includes the identification information of the user corresponding to the feature amount for verification.

As a feature amount for verification, a feature amount of biological information of the same type as that of a feature amount registered in the biological information database is used. When, for example, a registered feature amount is a feature amount of a fingerprint image, a feature amount of a fingerprint image is used as a feature amount for verification.

The biological information database may be provided in the biological information determination apparatus 101 or may be provided in a different apparatus. When the biological information database is provided in a different apparatus, the feature-amount verification unit 902 receives a registered feature amount from that different apparatus and uses the received feature amount for biological authentication.

Also, from among feature amounts registered in the biological information database, the feature-amount verification unit 902 compares only the feature amount that corresponds to the type of hand determined by the hand determination unit 112 (the type of hand specified for the user) with the feature amount for verification. When for example the result of determining the type of hand is the left hand, only the feature amount of the left hand is used for the verification from among the feature amounts of right and left hands registered in the biological information database. Thereby, biological authentication can be performed more rapidly than in a case where the feature amount for verification is verified with all registered feature amounts.

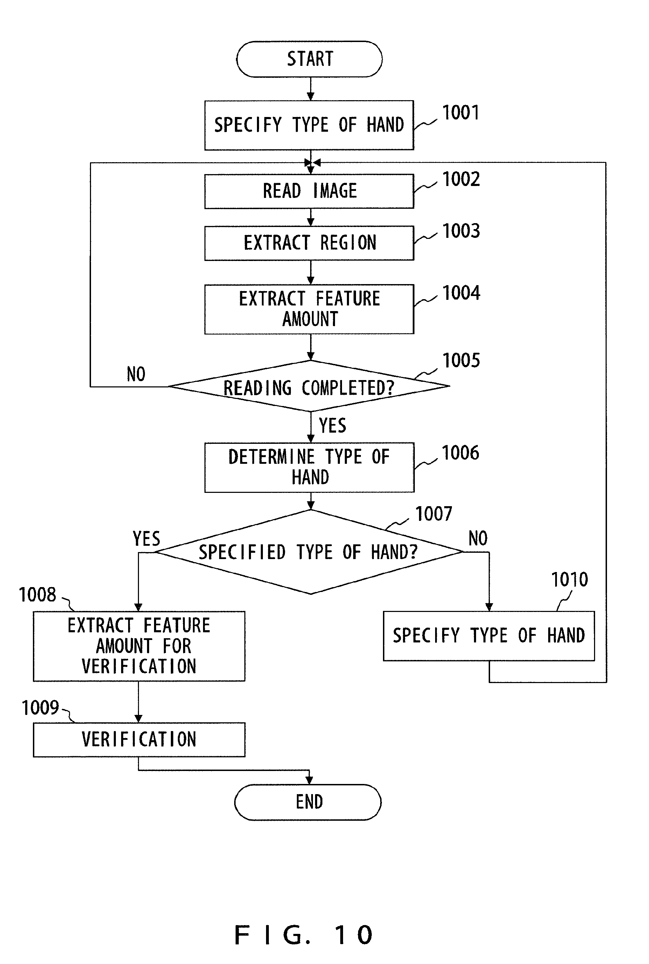

FIG. 10 is a flowchart illustrating an example of a biological information verification process performed by the biological information determination apparatus 101 illustrated in FIG. 9.

First, the hand determination unit 112 specifies for the user the type of hand as the verification target (step 1001), and the user extends the hand of the specified type of hand to the reading unit 301. The processes of step 1002 through step 1007 and step 1010 are the same as those of step 402 through step 407 and step 410 illustrated in FIG. 4.

When the hand extended by the user is the hand corresponding to the specified for the user (Yes in step 1007), the feature-amount-for-verification extraction unit 901 extracts a feature amount for verification from the biological information of the hand (step 1008). Then, the feature-amount verification unit 902 compares the feature amount for verification with a feature amount registered in the biological information database and outputs a verification result (step 1009).

According to the biological information verification process illustrated in FIG. 10, even when only fingerprint images of three fingers have been input, the type of hand can be easily determined without depending upon the fingerprint patterns. Also, a sensor for obtaining the positional relationship between a user and the casing of the biological information determination apparatus 101 is not necessary.

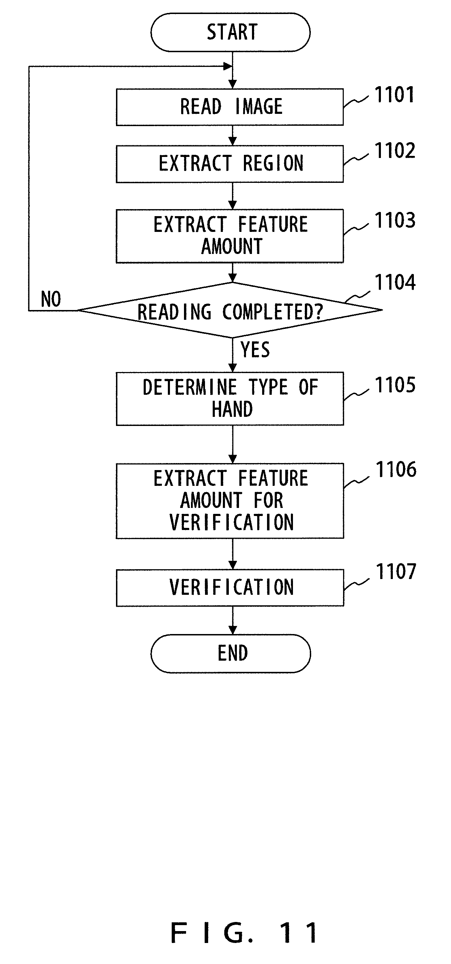

FIG. 11 is a flowchart illustrating an example of a biological information verification process that has omitted the specifying of the type of hand for a user.

First, a user extends either the right hand or the left hand to the reading unit 301. Thereafter, the biological information determination apparatus 101 performs the processes of step 1101 through step 1107. The processes of step 1101 through step 1107 are the same as those of step 1002 through step 1006 and step 1008 through step 1009 illustrated in FIG. 10.

The configurations of the biological information determination apparatus 101 illustrated in FIG. 1, FIG. 3 and FIG. 9 are just exemplary, and some of the constituents may be omitted or changed in accordance with applications or conditions of the biological information determination apparatus. For example, when the reading unit 301 illustrated in FIG. 3 or FIG. 9 is provided in a different apparatus, a reception unit may be provided instead of the reading unit 301. In such a case, the reception unit receives an image read by the reading unit 301 of the different apparatus so as to output the image to the storage unit 111, and the storage unit 111 stores that image. The biological information determination apparatus 101 performs the biological information registration process or the biological information verification process by using the received image.

Also, when images at a plurality of times of day are not required for determining the type of hand, the reading determination unit 304 illustrated in FIG. 3 or FIG. 9 may be omitted. In such a case, the right-left hand determination unit 112 uses only the feature amounts extracted from one image so as to determine the type of the hand.

The flowcharts illustrated in FIG. 2, FIG. 4 through FIG. 7, FIG. 10 and FIG. 11 are only exemplary, and some of the processes may be omitted or changed in accordance with configurations or conditions of the biological information determination apparatus. For example, when images at a plurality of times of day are not required for determining the type of hand, the processes of step 405, step 1005 and step 1104 respectively illustrated in FIG. 4, FIG. 10 and FIG. 11 may be omitted.

Also, when the specifying of the type of hand for a user is omitted in the biological information registration process, the processes of step 401, step 407, and step 410 illustrated in FIG. 4 may be omitted. Further, in step 403 illustrated in FIG. 4, the region extraction unit 302 may extract the region corresponding to each finger by using a process other than the region extraction process illustrated in FIG. 5.

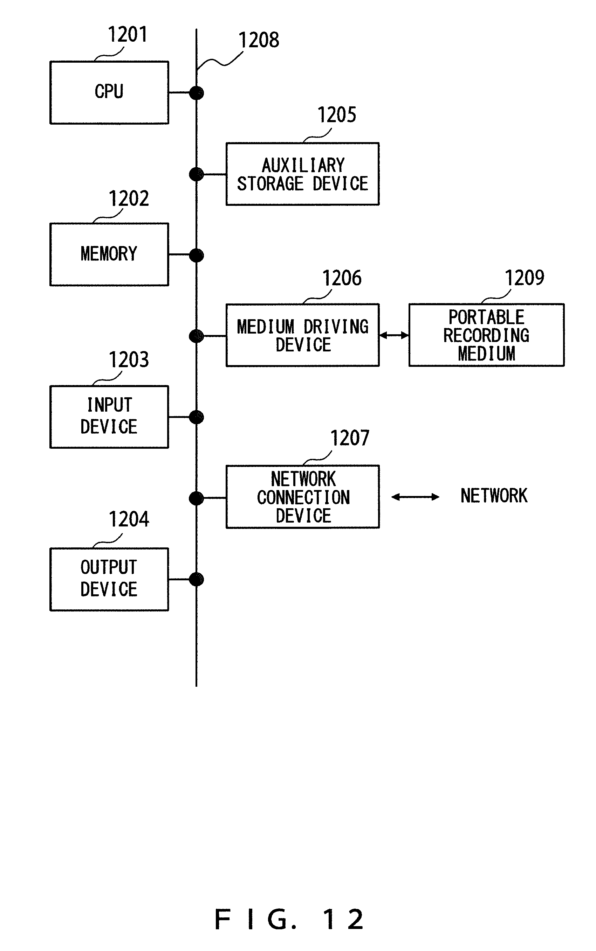

The biological information determination apparatus 101 illustrated in FIG. 1, FIG. 3 and FIG. 9 can be implemented by using for example the information processing apparatus (computer) illustrated in FIG. 12.

The information processing apparatus illustrated in FIG. 12 includes a Central Processing Unit (CPU) 1201, a memory 1202, an input device 1203, an output device 1204, an auxiliary storage device 1205, a medium driving device 1206, and a network connection device 1207. These constituents are connected to each other via a bus 1208. The reading unit 301 illustrated in FIG. 3 and FIG. 9 may be connected to the bus 1208.

The memory 1202 is a semiconductor memory such as for example a Read Only Memory (ROM), a Random Access Memory (RAM), a flash memory, etc., and stores a program and data used for performing processes. The memory 1202 may be used as the storage unit 111 illustrated in FIG. 1, FIG. 3, and FIG. 9.

The CPU 1201 (processor) operates as the hand determination unit 112, the region extraction unit 302, the region feature amount extraction unit 303, and the reading determination unit 304 illustrated in FIG. 1, FIG. 3 or FIG. 9 by for example using the memory 1202 to execute a program. The CPU 1201 also operates as the feature-amount-for-registration extraction unit 305 and the feature amount registration unit 306 illustrated in FIG. 3 and the feature-amount-for-verification extraction unit 901 and the feature amount verification unit 902 illustrated in FIG. 9.

The input device 1203 is for example a keyboard, a pointing device, etc., and is used for inputting instructions or information from an operator or a user. The output device 1204 is for example a display device, a printer, a speaker, etc., and is used for outputting inquiries or instructions to an operator or a user and outputting processing results. Instructions to users include the specifying of the type of hand, and processing results include information representing a verification result.

The auxiliary storage device 1205 is for example a magnetic disk device, an optical disk device, a magneto-optical disk device, a tape device, etc. The auxiliary storage device 1205 may be a hard disk drive. The information processing apparatus may store a program and data in the auxiliary storage device 1205 and load them onto the memory 1202 so as to use them. The auxiliary storage device 1205 may be used as the storage unit 111 and the biological information database illustrated in FIG. 1, FIG. 3 or FIG. 9.

The medium driving device 1206 drives a portable recording medium 1209 so as to access contents stored in the portable recording medium 1209. The portable recording medium 1209 is for example a memory device, a flexible disk, an optical disk, a magneto-optical disk, etc. The portable recording medium 1209 may be a Compact Disk Read Only Memory (CD-ROM), a Digital Versatile Disk (DVD), a Universal Serial Bus (USB) memory, etc. An operator can store a program and data in the portable recording medium 1209 and load them onto the memory 1202 so as to use them.

As described above, a computer-readable recording medium that stores a program and data to be used for processing is a physical (non-transitory) recording medium such as the memory 1202, the auxiliary storage device 1205, or the portable recording medium 1209.

The network connection device 1207 is a communication interface that is connected to a communication network such as a Local Area Network, a Wide Area Network, etc. so as to exchange data accompanying communications. The information processing apparatus may receive a program and data from an external device via the network connection device 1207 so as to load them onto the memory 1202 to use them.

When the reading unit 301 is provided in a different apparatus, the information processing apparatus may receive via the network connection device 1207 an image read by the reading unit 301 provided in that different apparatus.

Also, when the biological information database is provided in a different apparatus, the information processing apparatus may transmit a feature amount for registration and the identification information of a user to the different apparatus via the network connection device 1207. Also, the information processing apparatus may receive a registered feature amount from the different apparatus via the network connection device 1207.

Also, the information processing apparatus does not have to include all the constituents illustrated in FIG. 12, and may omit some of the constituents in accordance with applications or conditions. When for example it is not necessary to input instructions or information from an operator or a user, the input device 1203 maybe omitted. Also, when it is not necessary to output inquiries or instructions to an operator or a user or to output processing results, the output device 1204 may be omitted.

Also, when the reading unit 301 and the biological information database are provided in the biological information determination apparatus 101 so that communications with other apparatuses are not necessary, the network connection device 1207 may be omitted. When the portable recording medium 1209 is not used, the medium driving device 1206 may be omitted.

## Claims

1. A biological information determination apparatus, comprising:
a storage unit (111) configured to store an image representing biological information of a hand; and
a hand determination unit (112) configured to determine a type of the hand on the basis of a result of comparison between a first feature amount which is based on a size of a first region corresponding to a first finger, among a plurality of regions corresponding to a plurality of fingers in the image, and a second feature amount which is based on a size of a second region corresponding to a second finger, among the plurality of regions in the image.

2. The biological information determination apparatus according to claim 1, wherein
the first feature amount is a feature amount based on a width of the first region and the second feature amount is a feature amount based on a width of the second region.

3. The biological information determination apparatus according to claim 1 or 2, further comprising:
a reading unit (301) configured to read the image from the hand;
a region extraction unit (302) configured to extract the first region and the second region from among the plurality of regions in the image; and
a region feature amount extraction unit (303) configured to extract the first feature amount from the first region and to extract the second feature amount from the second region.

4. The biological information determination apparatus according to claim 1, wherein
the first feature amount is a feature amount based on a difference between an area of the first region in the image input at a first time and an area of the first region in the image input at a second time later than the first time, and the second feature amount is a feature amount based on a difference between an area of the second region in the image input at the first time and an area of the second region in the image input at the second time.

5. The biological information determination apparatus according to claim 1, wherein
the first feature amount is a feature amount based on a difference between an area of the first region in the image input at a first time and an area of the first region in the image input at a second time later than the first time and based on a width of the first region in the image input at the first time or the second time, and the second feature amount is a feature amount based on a difference between an area of the second region in the image input at the first time and an area of the second region in the image input at the second time and based on a width of the second region in the image input at the first time or the second time.

6. The biological information determination apparatus according to claim 4 or 5, further comprising:
a reading unit (301) configured to read the image from the hand;
a region extraction unit (302) configured to extract the first region and the second region from among the plurality of regions in the image;
a reading determination unit (304) configured to determine whether reading of the image by the reading unit has been completed; and
a region feature amount extraction unit (303) configured to extract the first feature amount from the first region and to extract the second feature amount from the second region by using a time at which the reading of the image has started as the first time and by using a time at which the reading of the image has been completed as the second time.

7. The biological information determination apparatus according to claim 6, wherein
the reading determination unit is configured to determine whether the reading of the image by the reading unit has been completed on the basis of a position of a third region which is one of the first region and the second region, an area of the third region, a contrast in the third region, a temporal change of the position of the third region, or a temporal change of the area of the third region.

8. The biological information determination apparatus according to one of claims 1 through 7, wherein
a thickness of the first finger or a likelihood of being given power of the first finger and a thickness of the second finger or a likelihood of being given power of the second finger are different.

9. The biological information determination apparatus according to one of claims 1 through 8, further comprising:
a feature-amount-for-verification extraction unit (901) configured to extract a feature amount for verification from the biological information of the hand; and
a feature amount verification unit (902) configured to compare the feature amount for verification with a feature amount of registered biological information corresponding to the type of the hand, and to output a verification result.

10. The biological information determination apparatus according to one of claims 1 through 8, further comprising:
a feature-amount-for-registration extraction unit (305) configured to extract a feature amount for registration from the biological information of the hand; and
a feature amount registration unit (306) configured to register the feature amount for registration in a biological information database.

11. A program for causing a computer to execute a process comprising:
referring (201) to a storage unit (111) that stores an image representing biological information of a hand; and
determining (202) a type of the hand on the basis of a result of comparison between a first feature amount which is based on a size of a first region corresponding to a first finger, among a plurality of regions corresponding to a plurality of fingers in the image, and a second feature amount which is based on a size of a second region corresponding to a second finger, among the plurality of regions in the image.
